# EUROPEAN PATENT APPLICATION

(11) **EP 4 708 373 A1**
(43) Date of publication of application: **11.03.2026**
(21) Application number: 25750269.0
(22) Date of filing: 10.07.2025
(51) Int. Cl.: H01M 4/13, H01M 4/139, H01M 4/38, H01M 4/62, H01M 10/052

(54) **POSITIVE ELECTRODE MATERIAL AND PREPARATION METHOD THEREFOR, POSITIVE ELECTRODE SHEET, AND LITHIUM-SULFUR BATTERY**

(30) Priority: 17.07.2024 CN 202410961403
(71) Applicant: Tsinghua University, Beijing 100084 (CN)
(72) Inventor: ZHANG, Yuegang, Beijing 100084 (CN); SU, Yipeng, Beijing 100084 (CN)
(74) Representative: Angerhausen, Christoph
(86) International application number: PCT/CN2025/107834
(87) International publication number: WO 2026/016953

(57) **Abstract**

The present application provides a cathode material comprising the following raw materials in parts by weight: 10 parts of a porous carbon conductive agent, 7 to 14 parts of an additive, 38 to 44 parts of an active material, and 32 to 40 parts of a solid electrolyte, wherein the active material comprises sulfur powder, and the additive comprises one or both of phosphorus pentasulfide and phosphorus trisulfide. Elemental sulfur reacts with lithium ions during battery discharge to form lithium sulfide, which can react with the additive to in-situ generate a lithium phosphorus sulfur solid electrolyte. The lithium phosphorus sulfur solid electrolyte not only enables most of the active material to participate in the charge-discharge cycle, improving the utilization rate of the active material, but also forms an ionic conductive network, allowing lithium ions to conduct faster. It also enhances the ionic conductivity of the cathode material, achieving high specific capacity and cycling stability in all-solid-state lithium-sulfur batteries under high areal loading conditions.

## Description

### CROSS-REFERENCE TO RELATED APPLICATION

This application claims priority to Chinese Patent Application No. 202410961403.6 entitled "Cathode material and method for preparing the same, cathode plate, and lithium-sulfur battery" and filed on July 17, 2024, which is incorporated herein by reference in its entirety.

### TECHNICAL FIELD

The present application belongs to the field of electrochemical technology, and specifically relates to a cathode material, a method for preparing the same, a cathode plate, and a lithium-sulfur battery.

### BACKGROUND

Among many new lithium battery systems, lithium-sulfur (Li-S) batteries have recently become a hot topic of research. Compared to traditional transition metal oxide systems, Li-S batteries exhibit a specific capacity far exceeding other battery systems. The specific capacity as high as 1675 mAh/g makes the Li-S battery system stand out far ahead among all lithium battery systems. Although its average discharge voltage is relatively low, its energy density remains at a high level. The all-solid-state Li-S battery system avoids many problems associated with traditional liquid Li-S batteries, including the shuttle effect and lithium metal pulverization.

The existing all-solid-state Li-S battery cathode systems are mostly prepared using complex materials and processes, and their performance is poor at high loading levels, failing to fully unleash the performance of sulfur as the active material. Therefore, there is a need for a cathode material capable of ensuring battery's cycling stability.

### SUMMARY

The present application provides a cathode material and a method for preparing the same, a cathode plate, and a lithium-sulfur battery, aiming to improve the problems of poor ionic conductivity and low specific capacity in lithium-sulfur batteries.

A first aspect of the present application provides a cathode material comprising the following raw materials in parts by weight: 10 parts of a porous carbon conductive agent, 7 to 14 parts of an additive, 38 to 44 parts of an active material, and 32 to 40 parts of a solid electrolyte, wherein the active material comprises sulfur powder, and the additive comprises one or both of phosphorus pentasulfide and phosphorus trisulfide.

In the present application, elemental sulfur reacts with lithium ions during battery discharge to form lithium sulfide, which can react with the additive to in-situ generate a lithium phosphorus sulfur (Li₃PS₄) solid electrolyte. The lithium phosphorus sulfur solid electrolyte not only enables most of the active material to participate in the charge-discharge cycle, improving the utilization rate of the active material, but also forms an ionic conductive network, allowing lithium ions to conduct faster. It also enhances the ionic conductivity of the cathode material, achieving high specific capacity and cycling stability in all-solid-state lithium-sulfur batteries under high areal loading conditions.

In some embodiments, the porous carbon conductive agent comprises one or more of Ketjen black, acetylene black, carbon black, graphite, carbon fiber, and activated carbon.

Using porous carbon conductive agents facilitates better attachment of phosphorus pentasulfide to the surface and better penetration of active materials into the pores.

In some embodiments, the solid electrolyte comprises one or more of lithium phosphorus sulfur chloride, lithium phosphorus sulfur, lithium germanium phosphorus sulfur, and lithium lanthanum zirconium oxygen.

A second aspect of the present application provides a method for preparing the above cathode material, including: ball milling-mixing the porous carbon conductive agent and the additive, followed by a first sintering treatment, to obtain a first intermediate product; ball milling and mixing the first intermediate product and the active material, followed by a second sintering treatment, to obtain a second intermediate product; and ball milling-mixing the second intermediate product with a solid electrolyte, to obtain the cathode material.

In some embodiments, the first sintering treatment is performed at a temperature of 300°C to 420°C.

In some embodiments, the first sintering treatment is performed at a temperature of 380°C to 400°C.

In some embodiments, the first sintering treatment is performed for 4h to 5h.

In some embodiments, the second sintering treatment is performed at a temperature of 150°C to 160°C.

In some embodiments, the second sintering treatment is performed for 10h to 12h.

In some embodiments, the ball milling-mixing is performed for 3h to 7h.

A third aspect of the present application provides a cathode plate comprising the cathode material of the first aspect or the cathode material prepared by the method of the second aspect.

A fourth aspect of the present application provides a lithium-sulfur battery comprising the cathode plate of the third aspect.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 illustrates the X-ray photoelectron spectroscopy (XPS) spectra of the first intermediate product provided by Example 1 of the present application.
FIG. 2 illustrates the XPS spectra of the second intermediate product provided by Example 1 of the present application.
FIG. 3 illustrates the XPS spectra of the cathode material provided by Example 1 of the present application.
FIG. 4 illustrates a comparison of the specific capacity of the lithium-sulfur battery provided by Example 1 of the present application and that of the lithium-sulfur battery provided by Comparative Example 1 at a rate of 0.1C and an active material areal loading of 4 mg/cm².
FIG. 5 illustrates a comparison of the specific capacity of the lithium-sulfur battery provided by Example 1 of the present application and that of the lithium-sulfur battery provided by Comparative Example 1 at different rates and an active material areal loading of 4 mg/cm².

### DETAILED DESCRIPTION

In order to make the purpose, the technical solution and beneficial technical effect of the present application clearer, the present application is described in further detail in combination with the following embodiments. It should be understood that the embodiments described in this specification are only for the purpose of explaining the present application and are not intended to limit the present application.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

In the context herein, it is to be noted that, unless otherwise indicated, "above" and "below" are inclusive of the present number, "more" in the phrase 'one or more' means two or more.

For lithium metal negative electrodes, they have the lowest voltage (-3.04V) and extremely high specific capacity (3860mAh/g), making their potential enormous. However, due to the insufficient safety of lithium metal negative electrodes, most commercial lithium-ion batteries currently use graphite negative electrodes. Meanwhile, cathode materials typically use transition metal oxides, which operate based on the intercalation reaction principle. Their current specific capacity is gradually approaching its limit, leaving very limited room for improvement. The cost of transition metal oxides remains high due to the expensive cobalt elements they contain, which also limits the large-scale application of lithium-ion batteries. Finally, the safety issues of lithium-ion batteries have gradually attracted people's attention. The frequent spontaneous combustion accidents of electric vehicles and the safety problems of mobile phone batteries are all far from satisfactory.

In traditional solid-state lithium-sulfur batteries, after sulfur and carbon are compounded, the low ionic conductivity of elemental sulfur and the discharge product lithium sulfide prevents sulfur from fully participating in the cycle, resulting in low specific capacity. Additionally, the low ionic conductivity of elemental sulfur and the discharge product lithium sulfide results in low ionic conductivity of the traditional cathode. At high loading levels, this prevents some active materials from fully participating in charge and discharge, leading to low specific capacity.

In view of this, it is necessary to provide a cathode material for solid-state lithium-sulfur battery with high mass fraction, high loading, and capable of improving specific capacity.

The first aspect of the present application provides a cathode material, which comprises the following raw materials in parts by weight: 10 parts of a porous carbon conductive agent, 7-14 parts of an additive, 38-44 parts of an active material, and 32-40 parts of a solid electrolyte; wherein the active material comprises sulfur powder; the additive comprises one or both of phosphorus pentasulfide and phosphorus trisulfide.

In the examples of the present application, lithium sulfide generated by the reaction of elemental sulfur with lithium ions during battery discharge can react with the additive to in-situ generate lithium phosphorus sulfur (Li₃PS₄) solid electrolyte. The lithium phosphorus sulfur solid electrolyte can not only enable most of the active materials to participate in the charge-discharge cycle, improve the utilization rate of active materials, form an ion-conducting network, allow lithium ions to conduct faster, but also improve the ionic conductivity of the cathode material. Therefore, under high areal loading, the assembled all-solid-state battery can improve the specific capacity of the lithium-sulfur battery while ensuring cycling stability.

Optionally, the additive can be phosphorus pentasulfide. Phosphorus pentasulfide, in combination with the porous carbon conductive agent, can enhance the specific capacity of the cathode material, thereby further improving the specific capacity of lithium-sulfur batteries.

The amount of the additive is in the range of 7 to 14 parts by weight, for example, it can be 7 parts, 8 parts, 9 parts, 10 parts, 11 parts, 12 parts, 13 parts, 14 parts by weight, or in a range consisting of any of the above values. Optionally, it can be in the range of 10 to 12 parts by weight.

The amount of the active material is in the range of 38 to 44 parts by weight, for example, it can be 38 parts, 39 parts, 40 parts, 41 parts, 42 parts, 43 parts, 44 parts by weight, or in a range consisting of any of the above values. Optionally, it can be in the range of 40 to 42 parts by weight.

The amount of the solid electrolyte is in the range of 32 to 40 parts by weight, for example, it can be 32 parts, 33 parts, 34 parts, 35 parts, 36 parts, 7 parts, 8 parts, 39 parts, 40 parts by weight, or in a range consisting of any of the above values. Optionally, it can be in the range of 38 to 40 parts by weight.

In some embodiments, the porous carbon conductive agent comprises one or more of Ketjen black, acetylene black, DENKA BLACK, thermal cracking carbon black, channel black, graphite, carbon fiber, and activated carbon. Optionally, it may be one or both of Ketjen black and activated carbon.

Using Ketjen black and activated carbon as the porous carbon conductive agent facilitates better adhesion of the additive to the surface of the porous carbon conductive agent, better penetration of the active material into the voids, thus better improving the conductivity of the battery.

In some embodiments, the solid electrolyte comprises one or more of lithium phosphorus sulfur chloride, lithium phosphorus sulfur, lithium germanium phosphorus sulfur, and lithium lanthanum zirconium oxygen. Optionally, it may be lithium phosphorus sulfur chloride. Selecting lithium phosphorus sulfur chloride as the solid electrolyte enables most of the active material to participate in the charge-discharge cycle, thereby improving the overall ionic conductivity of the cathode material.

The second aspect of the present application provides a method for preparing the above-cathode material, including the following steps:
S10: Ball milling-mixing the porous carbon conductive agent with the additive, followed by a first sintering treatment to obtain a first intermediate product;
S20: Ball milling-mixing the first intermediate product with the active material, followed by a second sintering treatment to obtain a second intermediate product;
S30: Ball milling-mixing the second intermediate product with the solid electrolyte to obtain the cathode material.

As can be understood by those skilled in the art, ball milling crushes and mixes materials by means of the impact of falling grinding media and the grinding effect between the grinding media and the inner wall of the ball mill. When the ball mill rotates, due to the friction between the grinding media and the inner wall of the ball mill, the raw materials are carried upward in the rotating direction and then fall down, being continuously crushed. It has good operating conditions, as the crushing is carried out in a closed machine without dust flying; it operates reliably, the grinding media are cheap and easy to replace; and it can be performed either intermittently or continuously. Choosing to perform ball milling in three times allows for better mixing of the two substances in each ball milling process, resulting in a better and more uniform mixing effect in the next ball milling. The additive can achieve the target effect during the first ball milling and better adhere to the surface of the porous carbon conductive agent. Multiple sintering processes can effectively control the temperature; when the additive needs to reach a molten state, the temperature is increased; the adsorption of the active material can be controlled at a low temperature, leading to a higher specific capacity of the resulting battery.

In some embodiments, the temperature for the first sintering treatment is from 300°C to 420°C, for example, 300°C, 310°C, 320°C, 340°C, 350°C, 360°C, 380°C, 400°C, 420°C, or in a range consisting of any of the above values. Optionally, the temperature is from 380°C to 400°C.

In some embodiments, the time for the first sintering treatment is from 4h to 5.2h, for example, 4h, 4.1h, 4.2h, 4.5h, 4.6h, 4.8h, 5h, or in a range consisting of any of the above values. Optionally, the time is from 4.5h to 5h.

The first sintering treatment at the above temperature enables the additive to reach a molten state, facilitating better adsorption on the surface of the porous carbon conductive agent.

In some embodiments, the temperature for the first sintering treatment is from 380°C to 400°C.

In some embodiments, the rotation speed of the ball milling-mixing is from 400rpm to 500rpm.

In some embodiments, the temperature for the second sintering treatment is from 150°C to 160°C, for example, 150°C, 151°C, 152°C, 155°C, 156°C, 158°C, 160°C, or in a range consisting of any of the above values. Optionally, the temperature is from 152°C to 155°C.

In some embodiments, the time for the second sintering treatment is from 10h to 14h, for example, 10h, 10.5h, 11h, 11.5h, 12h, or in a range consisting of any of the above values. Optionally, the time is from 11h to 12h.

The temperature for the second sintering treatment is selected as 152°C to 155°C, and the time is selected as 11 h to 12 h, which allows the active material to better form an ionic conductive network when the additive enters the voids of the porous carbon conductive agent, thereby increasing the specific capacity of the battery.

In some embodiments, the time for ball milling-mixing is from 3h to 8h, for example, 6h, 6.2h, 6.4h, 6.5h, 6.6h, 6.8h, 7h, 8h, or in a range consisting of any of the above values. Optionally, the time for ball milling-mixing is from 6.5h to 7h, which can achieve more uniform mixing, and the particle size can reach the target range, facilitating the subsequent sintering process.

The third aspect of the present application provides a cathode plate comprising a cathode current collector and the cathode material according to the first aspect or the cathode material prepared by the method according to the second aspect, which is applied on the cathode current collector.

The fourth aspect of the present application provides a lithium-sulfur battery comprising a battery casing, and the cathode plate according to the third aspect, a negative electrode plate, a separator, and an electrolyte located inside the battery casing.

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Comparative Example 1

S10: 10 parts of Ketjen black EC600-JD was added into a ball mill tank; the ball milling-mixing was performed at a rotation speed of 500 rpm for 4 hours, then the resulting mixture was transferred to a stainless steel reactor, and the first sintering treatment was conducted at 400°C for 5 hours to obtain the first intermediate product.

S20: the first intermediate product and 40 parts of sulfur powder were added into the ball mill tank; the ball milling-mixing was performed at a rotation speed of 500 rpm for 5 hours, then the resulting mixture was transferred a stainless steel reactor, and the second sintering treatment was conducted at 155°C for 12 hours to obtain the second intermediate product.

S30: the second intermediate product and 40 parts of lithium phosphorus sulfur chloride were added into the ball mill tank; the ball milling-mixing was performed at a rotation speed of 500 rpm for 7 hours to obtain the cathode material.

### Comparative Example 2

S10: 10 parts of Ketjen black EC600-JD and 10 parts of potassium iodide were added into a ball mill tank; the ball milling-mixing was performed at a rotation speed of 500 rpm for 4 hours, then the resulting mixture was transferred to a stainless steel reactor, and the first sintering treatment was conducted at 400°C for 5 hours to obtain the first intermediate product.

S20: the first intermediate product and 40 parts of sulfur powder were added into the ball mill tank; the ball milling-mixing was performed at a rotation speed of 500 rpm for 5 hours, then the resulting mixture was transferred a stainless steel reactor, and the second sintering treatment was conducted at 155°C for 12 hours to obtain the second intermediate product.

S30: the second intermediate product and 40 parts of lithium phosphorus sulfur chloride were added into the ball mill tank; the ball milling-mixing was performed at a rotation speed of 500 rpm for 7 hours to obtain the cathode material.

### Example 1

S10: 10 parts of Ketjen black EC600-JD and 10 parts of phosphorus pentasulfide were added into a ball mill tank; the ball milling-mixing was performed at a rotation speed of 500 rpm for 4 hours, then the resulting mixture was transferred to a stainless steel reactor, and the first sintering treatment was conducted at 400°C for 5 hours to obtain the first intermediate product.

S20: the first intermediate product and 40 parts of sulfur powder were added into the ball mill tank; the ball milling-mixing was performed at a rotation speed of 500 rpm for 5 hours, then the resulting mixture was transferred a stainless steel reactor, and the second sintering treatment was conducted at 155°C for 12 hours to obtain the second intermediate product.

S30: the second intermediate product and 40 parts of lithium phosphorus sulfur chloride were added into the ball mill tank; the ball-milling mixing was performed at a rotation speed of 500 rpm for 7 hours to obtain the cathode material.

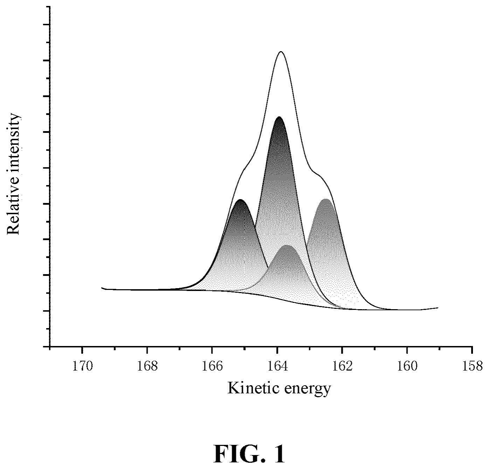

The X-ray photoelectron spectroscopy (XPS) spectra of the first intermediate product prepared in Example 1 was shown in FIG. 1. It can be seen that the first intermediate product had two characteristic peaks and the split doublets thereof, which were at 163.9 eV and 162.3 eV, respectively, matching the two characteristic peaks of phosphorus pentasulfide.

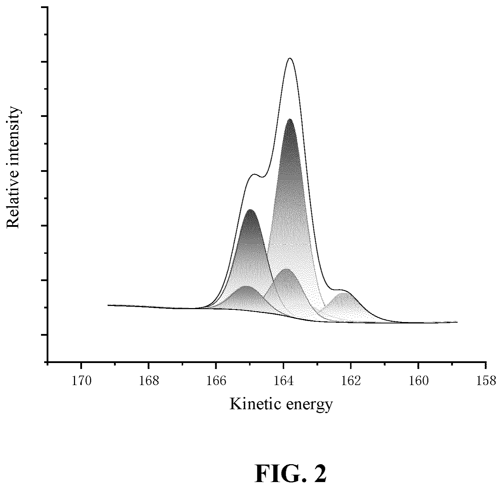

The XPS spectra of the second intermediate product prepared in Example 1 was shown in FIG. 2. It can be seen that the second intermediate product contained both the above-mentioned characteristic peaks of phosphorus pentasulfide and the characteristic peak of elemental sulfur at 164.0 eV and the split doublet thereof, with the intensity of the sulfur characteristic peak being significantly higher than that of phosphorus pentasulfide.

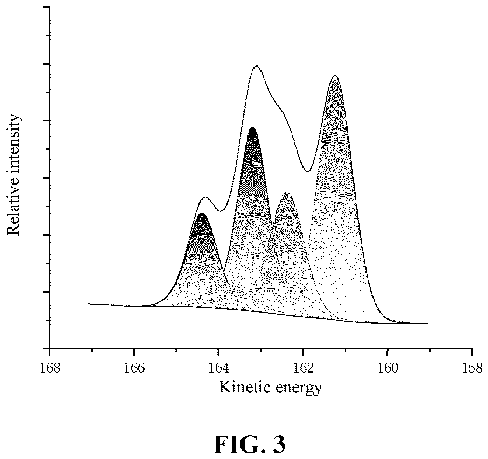

The XPS spectra of the cathode material prepared in Example 1 was shown in FIG. 3. It can be seen that the cathode material contained all the aforementioned peaks, as well as the characteristic peak of lithium phosphorus sulfur chloride at 161.1 eV, indicating that the cathode material was a composite of the second intermediate product and lithium phosphorus sulfur chloride.

### Assembling of Lithium-Sulfur Batteries:

In a PEEK mold with an outer diameter of 40 mm and an inner diameter of 10 mm, 100 mg of lithium phosphorus sulfur chloride (solid electrolyte) was pressed into a sheet under a pressure of 300 MPa. Then, 7.85 mg of the cathode material powder provided in Example 1 (with a sulfur areal loading of 4 mg/cm²) was added to one side of the electrolyte layer, and a lithium-indium alloy negative electrode was assembled on the other side at a molar ratio of 0.5:1. After the entire battery was assembled, an external frame was used to apply a pressure of 60 MPa to the battery, and electrochemical tests were conducted at 30°C.

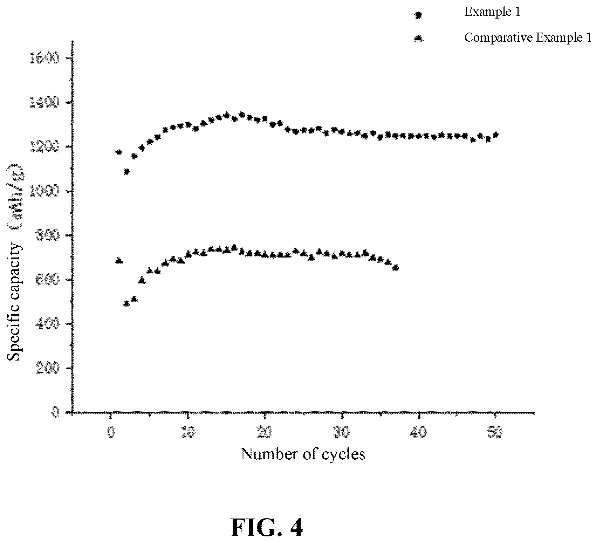

FIG. 4 illustrates a comparison diagram of the specific capacity of the lithium-sulfur battery provided by Example 1 of the present application and that of the lithium-sulfur battery provided by Comparative Example 1 at a rate of 0.1C and an active material area loading of 4 mg/cm².

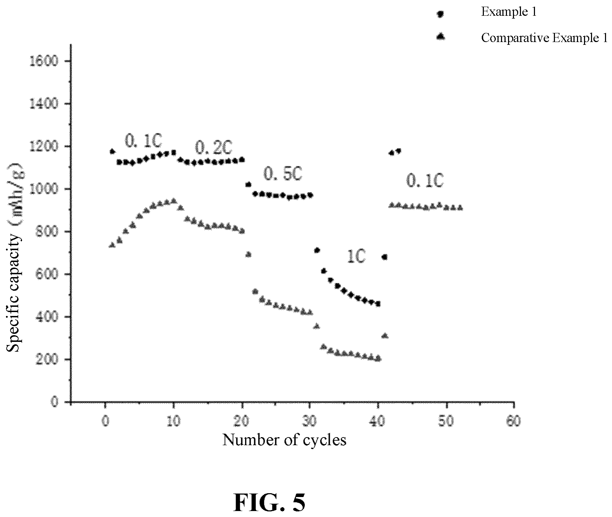

FIG. 5 illustrates a comparison diagram of the specific capacity of the lithium-sulfur battery provided by Example 1 of the present application and that of the lithium-sulfur battery provided by Comparative Example 1 at different rates and an active material area loading of 4 mg/cm², in which 1C corresponds to 1675 mA/g.

### Example 2

This example differs from Example 1 only in that the amount of phosphorus pentasulfide was 7 parts by weight.

### Example 3

This example differs from Example 1 only in that the amount of phosphorus pentasulfide was 14 parts by weight.

### Example 4

This example differs from Example 1 only in that the amount of sulfur powder was 50 parts by weight.

### Example 5

This example differs from Example 1 only in that the amount of lithium phosphorus sulfur chloride was 30 parts by weight.

### Example 6

This example differs from Example 1 only in that the temperature for the first sintering was 320°C and the time for the first sintering time was 4 hours.

### Example 7

This example differs from Example 1 only in that the temperature for the first sintering was 400°C and the time for the first sintering was 2 hours.

Performance tests were conducted on the lithium-sulfur batteries provided in Examples 1-9 and Comparative Examples 1-2, and the results are shown in Table 1.

**Table 1**

| | Specific capacity at a rate of 0.1C mAh/g | Specific capacity at a rate of 0.2C mAh/g | Specific capacity at a rate of 0.5C mAh/g |
|---|---|---|---|
| Example 1 | 1300 | 1100 | 900 |
| Example 2 | 1000 | 900 | 750 |
| Example 3 | 950 | 800 | 650 |
| Example 4 | 400 | 350 | 250 |
| Example 5 | 600 | 500 | 300 |
| Example 6 | 800 | 700 | 450 |
| Example 7 | 750 | 650 | 400 |
| Comparative Example 1 | 700 | 600 | 400 |
| Comparative Example 2 | 400 | 300 | 200 |

After conducting experiments with different parameters, it can be concluded that altering the materials, sintering temperature, or sintering time leads to varying degrees of degradation in the performance of the cathode material. Therefore, the current processing method can yield a cathode material with optimal performance.

The above mentioned descriptions only show particular implementations of the present application and but are not intended to limit the protection scope of the present application. Any modification or replacement readily figured out by a person skilled in the art within the technical scope disclosed in the present application shall fall within the protection scope of the present application. Therefore, the protection scope of the present application shall be determined by the protection scope of the claims.

## Claims

1. A cathode material comprising the following raw materials in parts by weight: 10 parts of a porous carbon conductive agent, 7 to 14 parts of an additive, 38 to 44 parts of an active material, and 32 to 40 parts of a solid electrolyte, wherein
the active material comprises sulfur powder, and
the additive comprises one or both of phosphorus pentasulfide and phosphorus trisulfide.

2. The cathode material according to claim 1, wherein the porous carbon conductive agent comprises one or more of Ketjen black, acetylene black, carbon black, graphite, carbon fiber, and activated carbon.

3. The cathode material according to claim 1, wherein the solid electrolyte comprises one or more of lithium phosphorus sulfur chloride, lithium phosphorus sulfur, lithium germanium phosphorus sulfur, and lithium lanthanum zirconium oxygen.

4. A method for preparing the cathode material according to any one of claims 1-3, wherein the method includes the following steps:
ball milling-mixing the porous carbon conductive agent and the additive, followed by a first sintering treatment, to obtain a first intermediate product;
ball milling-mixing the first intermediate product and the active material, followed by a second sintering treatment, to obtain a second intermediate product; and
ball milling-mixing the second intermediate product with a solid electrolyte, to obtain the cathode material.

5. The method according to claim 4, wherein the first sintering treatment is performed at a temperature of 300°C to 420°C; and/or
the first sintering treatment is performed for 4h to 5.2h.

6. The method according to claim 5, wherein the first sintering treatment is performed at a temperature of 380°C to 400°C.

7. The method according to claim 4, wherein the second sintering treatment is performed at a temperature of 150°C to 160°C; and/or
the second sintering treatment is performed for 10h to 12h.

8. The method according to claim 4, wherein the ball milling-mixing is performed for 3h to 7h.

9. A cathode plate comprising the cathode material according to any one of claims 1-3 or the cathode material prepared by the method according to any one of claims 4-8.

10. A lithium-sulfur battery comprising the cathode plate according to claim 9.
